Europäisches Patentamt

European Patent Office

Office européen des brevets

(19)

(11) Veröffentlichungsnummer: **0 394 214**
**A1**

# EUROPÄISCHE PATENTANMELDUNG

(21) Anmeldenummer: **90890102.8**

(22) Anmeldetag: **05.04.90**

(51) Int. Cl.$^5$: **C22B 4/00, F27B 3/18**

(30) Priorität: **13.04.89 AT 877/89**

(43) Veröffentlichungstag der Anmeldung:
**24.10.90 Patentblatt 90/43**

(84) Benannte Vertragsstaaten:
**BE CH DE DK ES FR GB GR IT LI LU NL SE**

(71) Anmelder: **VOEST-ALPINE INDUSTRIEANLAGENBAU GESELLSCHAFT m b.H.**
**Turmstrasse 44**
**A-4020 Linz(AT)**

(72) Erfinder: **Glöckler, Gerhard, Dipl.-Ing.**
**Ehrendorf 70**
**A-4694 Ohlsdorf(AT)**
Erfinder: **Müller, Heinz, Dipl.-Ing. Dr.**
**Badergasse 1**
**A-4501 Neuhofen(AT)**
Erfinder: **Kepplinger, Leopold W., Dipl.-Ing. Dr.**
**Lahholdstrasse 7**
**A-4020 Linz-Hart(AT)**
Erfinder: **Matzawrakos, Panajiotis, Dipl.-Ing.**
**Schiffmannstrasse 30**
**A-4020 Linz(AT)**
Erfinder: **Koch, Erwin, Dr.**
**Ederackerstrasse 7**
**A-4060 Leonding(AT)**
Erfinder: **Auberger, Heinrich, Ing.**
**Liebermannweg 32**
**A-4020 Linz(AT)**

(74) Vertreter: **Wolfram, Gustav, Dipl.-Ing.**
**Schwindgasse 7 P.O. Box 205**
**A-1041 Wien(AT)**

(54) **Anlage zur metallurgischen Behandlung von Metallen, Metallverbindungen und/oder Metall-Legierungen oder zur Herstellung von Calziumcarbid.**

(57) Eine Anlage zur metallurgischen Behandlung, insbesondere zum Schmelzen oder Schmelzreduzieren von Metallen, Metallverbindungen und/oder Metall-Legierungen oder zur Herstellung von Calziumcarbid, weist einen Möller (5) aufnehmenden Schacht (1), einen seitlich und unterhalb des Schachtes (1) liegenden Schmelzensammelraum (26) sowie mindestens einen seitlich des Schachtes (1) angeordneten Brenner (48) auf.

Um eine exakte Prozeßführung der Metallschmelze (27) und ein kontrolliertes Einschmelzen bzw. Reduzieren des Möllers (5) zu ermöglichen, ist der Brenner (48) in einem das untere Schachtende mit dem Schmelzensammelraum (26) verbindenden Brennraum (31) angeordnet und als Plasmabrenner (48) ausgebildet, wobei der Brennraum (31) auf einem Niveau oberhalb des Schmelzensammelraumes (26) liegt und einen gegen den Schacht (1) ebenen oder vorzugsweise ansteigenden Brennraumboden (32) aufweist, der in den Schmelzensammelraum (26) mit einer die Metallschmelze (27) vom Möller (5) trennenden Überlaufkante (34) übergeht.

EP 0 394 214 A1

FIG. 2

## Anlage zur metallurgischen Behandlung von Metallen. Metallverbindungen und/oder Metall-Legierungen oder zur Herstellung von Calziumcarbid

Die Erfindung betrifft eine Anlage zur metallurgischen Behandlung, insbesondere zum Schmelzen oder Schmelzreduzieren von Metallen, Metallverbindungen und/oder Metall-Legierungen oder zur Herstellung von Calziumcarbid, mit einem Möller aufnehmenden Schacht, mit einem seitlich und unterhalb des Schachtes liegenden Schmelzensammelraum sowie mindestens einem seitlich des Schachtes angeordneten Brenner.

Eine Anlage dieser Art ist aus der AT-B - 363.503 bekannt. Die bekannte Anlage dient zum kontinuierlichen Schmelzen von weitgehend vorreduzierten metallurgischen Materialien, insbesondere Eisenschwamm. Bei der bekannten Anlage wird Möller von einem Schacht über einen langen horizontalen Zuführungsraum einem die Schmelze aufnehmenden Schmelzgefäß zugeführt, wobei der Möller im freien Fall auf die Badoberfläche der Schmelze fällt. Knapp oberhalb der Badoberfläche ist ein Brenner angeordnet, der mit Braunkohlenstaub und Sauerstoff beschickt wird und dessen Flamme die Badoberfläche bestreicht und gegen den herabfallenden Möller gerichtet ist. Der Möller bildet einen in der Schmelze fußenden Schüttkegel.

Durch den in der Schmelze fußenden Möllerschüttkegel ist die Überhitzung des Schmelzbades nicht möglich. Zudem ist bei diesem Verfahren ein Schmelzreduzieren des bereits in der Schmelze eingebrachten Möllers nicht möglich. Bei diesem bekannten Verfahren ist weiters von Nachteil, daß Temperatur und Energiedichte durch die Art der Verbrennung begrenzt sind. Das heißt,verlangen Schmelz- oder Schmelzreduktionsprozesse wesentlich höhere Temperaturen als die im vorliegenden Fall für die Erschmelzung des Eisenschwammes notwendigen, so wird die Beheizung nicht ausreichen.

Die Erfindung bezweckt die Vermeidung dieser Nachteile und Schwierigkeiten und stellt sich die Aufgabe, eine Anlage der eingangs beschriebenen Art zu schaffen, bei der hohe Temperaturen und Energiedichten erreicht werden können und das Entstehen von Verbrennungsgasen vermieden wird, welche den metallurgischen Prozeß stören könnten. Weiters soll der Aufenthalt des Möllers im Brennraum exakt bemessen werden können, so daß ein kontrolliertes Einschmelzen bzw. Schmelzreduzieren des Möllers möglich ist. Zudem soll die dem Ofen zugeführte Energie optimal genutzt werden können und sollen Wärmeverluste gering gehalten werden.

Diese Aufgabe wird erfindungsgemäß dadurch gelöst, daß der Brenner in einem das untere Schachtende mit dem Schmelzensammelraum verbindenden Brennraum angeordnet und als Plasmabrenner ausgebildet ist, wobei der Brennraum auf einem Niveau oberhalb des Schmelzensammelraumes liegt und einen gegen den Schacht ebenen oder vorzugsweise ansteigenden Brennraumboden aufweist, der in den Schmelzensammelraum mit einer die Metallschmelze vom Möller trennenden Überlaufkante übergeht.

Die erfindungsgemäße Anlage eignet sich insbesondere zur Erschmelzung von Eisenlegierungenl wie Fe-Mn, Fe-Si, Fe-Cr, Fe-W, Fe-V, Fe-Mo, Fe-Ni, Fe-Co, Fe-Ti, Fe-Nb, Fe-Ta, Fe-P und Fe-Zr, sowie auch zur Erschmelzung der Metalle Cu, Al, Ni, Co, Mg, Cr, W, Mo, Zr, Si, Hf, V und deren Legierungen sowie zur Erzeugung von Calziumcarbid.

Vorzugsweise erweitert sich der Brennraum im Grundriß gesehen ausgehend vom Schachtraum zum Schmelzensammelraum hin.

Eine optimale Wärmebilanz weist der erfindungsgemäße Ofen dann auf, wenn der Schachtraum den Brennraum teilweise peripher umgibt und der Schmelzensammelraum an der vom Schachtraum freigelassenen Seite des Brennraumes anschließt.

Vorteilhaft ist im Übergangsraum vom Schachtraum zum Brennraum eine Möllerfördereinrichtung vorgesehen, wodurch eine exakte Dosierung der Zuführrate des Möllers möglich ist.

Gemäß einer bevorzugten Ausführungsform ist die Möllerfördereinrichtung als schräge Rutschfläche ausgebildet.

Eine weitere bevorzugte Ausführungsform ist dadurch gekennzeichnet, daß die Möllerfördereinrichtung als Schubeinrichtung ausgebildet ist.

Um das im Brennraum entstehende Gas optimal zu nutzen, u.zw. hinsichtlich der fühlbaren Wärme des Gases, der in ihm enthaltenen Stäube, Zwischenprodukte, Sublimate und Kondensate, sowie zur Erreichung einer optimalen Regelbarkeit der Anlage, u.zw. hinsichtlich der Anpassung der Vorwärm- und Reaktionstemperaturen im Schacht, und zur Verringerung der Emission von Schadstoffen und zur Erzielung eines gleichmäßigen Ofenganges weist der Brennraum zweckmäßig einen Abzugskanal auf, der über mindestens eine Zweigleitung mit dem Schachtraum verbindbar ist.

Will man in den Brennraum Feinmöller, Legierungs- und Zuschlagstoffe einbringen, geschieht dies zweckmäßig dadurch, daß in den Brennraum eine Zuführleitung mündet.

Zum leichteren Inbetriebnehmen der Anlage und zur örtlichen Steuerung der Temperaturverteilung ist vorteilhaft der Plasmabrenner wahlweise von einer in den Brennraum ragenden Position A in eine gegen den Schmelzensammelraum ragende Position B bzw. umgekehrt bringbar.

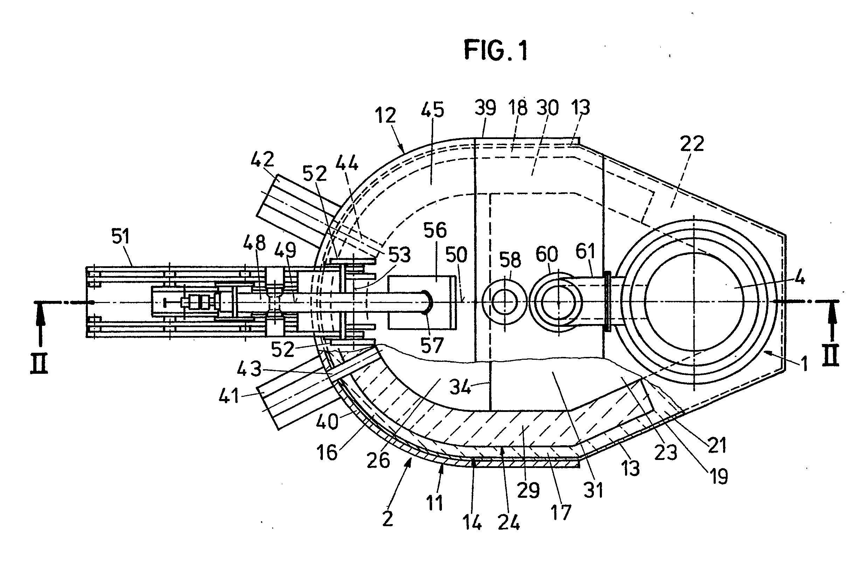

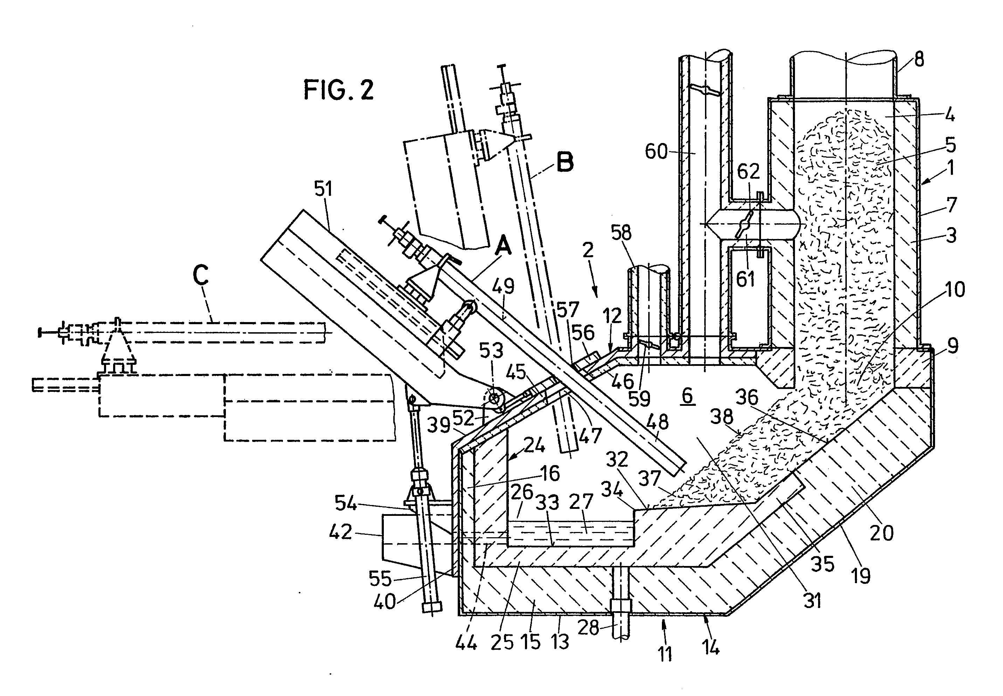

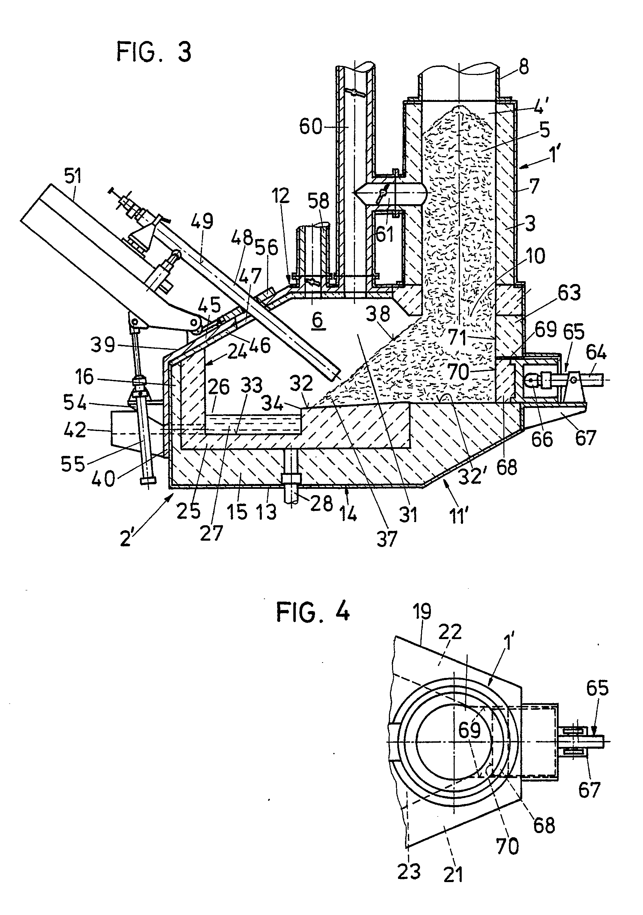

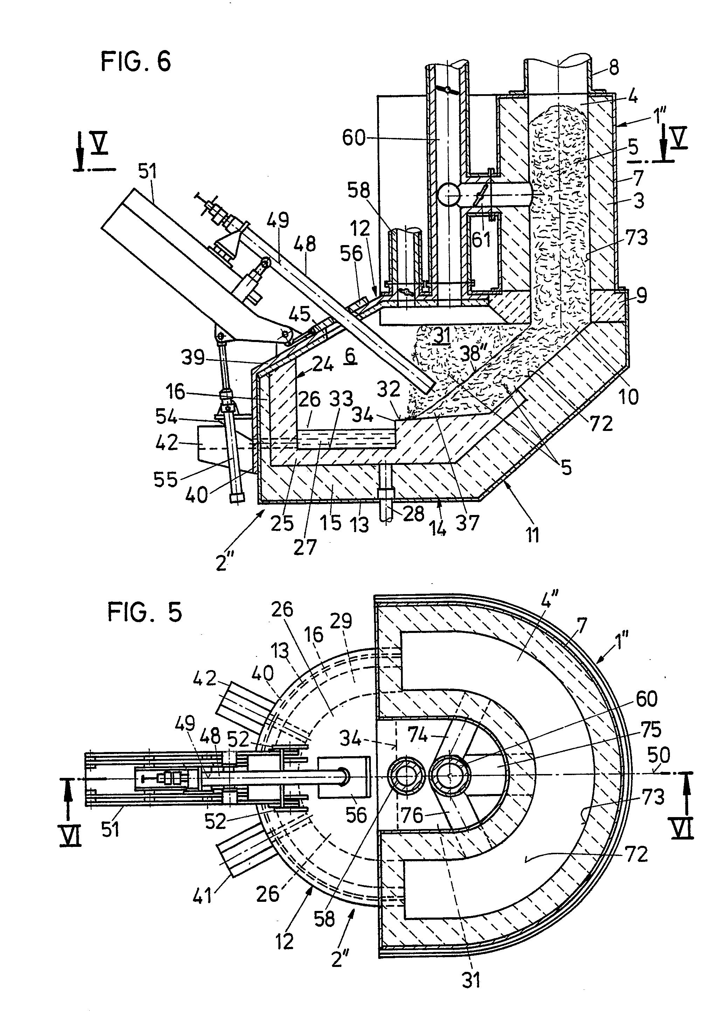

Die Erfindung ist nachfolgend anhand der in der Zeichnung dargestellten Ausführungsbeispiele näher erläutert, wobei Fig. 1 einen teilweise geschnittenen Grundriß einer Anlage und Fig. 2 einen Vertikalschnitt gemäß der Linie II-II der Fig. 1 darstellen. Fig. 3 zeigt in analoger Darstellung zu Fig. 2 ein weiteres Ausführungsbeispiel einer Anlage und Fig. 4 einen Teil-Grundriß zu Fig. 3. Fig. 5 veranschaulicht eine weitere Ausführungsform in einem teilweise geschnittenen Grundriß und Fig. 6 einen Vertikalschnitt entlang der Linie VI-VI der Fig. 5.

Die Anlage gemäß den Figuren 1 und 2 weist einen Schacht 1 und einen integral mit diesem zusammenhängenden, seitlich darunter angeordneten Schmelzofen 2 auf. Der Schacht 1 erstreckt sich in etwa vertikaler Richtung vom Schmelzofen 2 nach oben und weist eine feuerfeste Innenauskleidung 3 auf, die einen Schachtraum 4 mit Kreisquerschnitt begrenzt. Der Schachtraum 4 ist mit Möller 5 gefüllt, der von den im Ofeninnenraum 6 des Schmelzofens 2 entstehenden Gasen durchströmt wird.

Die Innenauskleidung 3 des Schachtes 1 ist von einem Blechmantel 7 ummantelt. Am oberen Ende des Schachtes 1 ist eine rohrförmige Möllerzuführung 8 angeflanscht. An seinem unteren Ende mündet der Schachtraum 4 über einen von einem Flansch 9 begrenzten Mündungsbereich 10 in den Ofeninnenraum 6 des Schmelzofens 2.

Der Schmelzofen 2 weist einen Ofenunterteil 11 und eine diesen bedeckende Haube 12 auf, die den Ofeninnenraum 6 begrenzen. Der Ofenunterteil 11 ist mit einer von einem Blechmantel 13 umgebenen äußeren Ausmauerung 14 mit einem waagrechten Bodenteil 15 versehen. An dem dem Schacht 1 abgewandten Ende des Bodenteiles 15 schließt eine sich vertikal nach oben bis zur Haube 12 erstreckende, im Grundriß gesehen konvex-bogenförmige Wand 16 an, die seitlich in vertikal vom Bodenteil 15 nach oben gerichtete, zueinander parallele Seitenwände 17, 18 übergeht. Diese Seitenwände 17,18 erstrecken sich ebenfalls bis zur Haube 12.

An dem dem Schacht 1 zugewandten Ende des Bodenteiles 15 der äußeren Ausmauerung 14 schließt ein sich bis zum Mündungsbereich 10 des Schachtes 1 erstreckender Übergangsteil 19 der äußeren Ausmauerung 14 an, dessen Boden 20 gegen den Schacht 1 stark ansteigt und dessen sich vertikal nach oben bis zur Haube 12 erstreckende Seitenwände 21,22 im Grundriß gesehen V-förmig angeordnet sind und einen sich zum Ofeninnenraum 6 hin erweiternden Übergangsraum 23 begrenzen.

Die äußere Ausmauerung 14 des Ofenunterteiles 11 umschließt eine den Ofeninnenraum 6 begrenzende innere, elektrisch leitfähige Ausmauerung 24, deren Bodenteil 25 an dem vom Schacht 1 abgewandten Bereich eine Vertiefung aufweist, die einen im Grundriß gesehen etwa halbkreisförmigen Schmelzensammelraum 26 für Metallschmelze 27 bildet. Im Bodenteil 15 der äußerenAusmauerung 14 ist im Bereich des Schmelzensammelraumes 26 eine Bodenelektrode 28 vorgesehen, die in Kontakt mit der Ausmauerung 24 steht.

An den Schmelzensammelraum 26 grenzt ein seitlich von parallel zueinander angeordneten, sich vertikal bis zur Haube 12 und seitlich bis zum Übergangsteil 19 erstreckenden Brennraumseitenwänden 29,30 begrenzter Brennraum 31 an. Der gegen den Schacht 1 geringfügig ansteigende (in einem Winkel von bis zu 5°) Brennraumboden 32 liegt auf einem höheren Niveau als der Boden 33 des Schmelzensammelraumes 26 und geht über eine Überlaufkante 34 in den Schmelzensammelraum 26 über. Der Brennraumboden 32 ragt mit einem gegen den Schacht 1 ansteigenden, in den Übergangsteil 19 ragenden Ausmauerungsteil 35 gegen den Schachtraum 4, der sich jedoch nur über einen unteren Teil des stark ansteigenden Übergangsteiles 19 erstreckt.

Die Innenfläche des stark ansteigenden Ausmauerungsteiles 35 der inneren Ausmauerung 24 und die Innenfläche des ebenfalls stark ansteigenden Bodens 20 der äußeren Ausmauerung 14 bilden eine Rutschfläche 36, die bis unter den Schachtraum 4 reicht. Über diese Rutschfläche 36 gelangt der Möller 5 selbsttätig in den Brennraum 31 und kommt auf dem Brennraumboden 32 zu liegen, wobei sich der Fuß 37 des entstehenden Möllerschüttkegels 38 bis in die Nähe der Überlaufkante 34 zum Schmelzensammelraum 26 erstreckt. Die Neigung der auf diese Weise als Fördereinrichtung wirkenden schrägen Rutschfläche 36 ist dabei etwa entsprechend dem Schüttwinkel des Möllers 5 gewählt.

Die Haube 12 des Schmelzofens 2 ist von einem wassergekühlten Blechpanzer 39 gebildet. Der Blechpanzer 39 umhüllt die vertikal nach oben gerichteten Wände 16,17, 18 der äußeren Ausmauerung 14 des Ofenunterteiles 11. Am Außenmantel des vertikal nach oben gerichteten bogenförmigen Haubenteiles40 sind zwei im Winkel zueinander angeordnete Abstichrinnen 41,42 angeordnet, in die jeweils eine Abstichöffnung 43,44 des Schmelzensammelraumes 26 mündet.

Der über dem Schmelzensammelraum 26 liegende Haubenteil 45 erstreckt sich in Richtung zum Schacht 1 schräg nach oben und setzt sich über dem Bereich des Brennraumes 31 in waagrechter Richtung bis zum Schacht 1 fort.

Der den Ofeninnenraum 6 bedeckende Haubenteil 45 ist an seiner Innenseite mit einer Ausmauerung 46 versehen. In der Schräge des Haubenteiles 45 ist eine Öffnung 47 vorgesehen, durch die ein Plasmabrenner 48 in den Ofeninnenraum 6 des Schmelzofens 2 ragt. Der Plasmabrenner 48, dessen Längsachse 49 in einer durch die Längsachse 50 der Anlage gelegten Vertikalebene liegt, ragt in der mit vollen Linien dargestellten Normalbetriebsposition A schräg nach unten in den Brennraum 31 des Schmelzofens 2 und ist gegen den Fuß 37 des Möllerschüttkegels 38 gerichtet.

Der Plasmabrenner 48 ist in Richtung seiner Längsachse 49 verschiebbar in einer Führungsvorrichtung 51 gelagert, die an in der Schräge des Haubenteiles 45 starr befestigten Gelenklaschen 52 um eine horizontale Achse 53 schwenkbar befestigt ist. Die Schwenkbewegung wird durch einen unterhalb der schwenkbaren Führungsvorrichtung 51 angeordneten und an einer am vertikalen bogenförmigen Haubenteil 40 starr befestigten Lasche 54 angelenkten Druckmittelzylinder 55, wie einem Hydraulikzylinder, bewirkt.

Der Plasmabrenner 48 ist somit aus der Normalbetriebsposition A in eine andere, z.B. in die in Fig. 2 mit strichpunktierten Linien dargestellte Position B, in der er gegen den Schmelzensammelraum 26 gerichtet ist, und in eine mit strichlierten Linien dargestellte Ruheposition C, in der sich der Plasmabrenner 48 außerhalb des Schmelzofens 2 befindet, verschieb- bzw. verschwenkbar. Um eine gute Führung des in den Ofeninnenraum 6 ragenden Teiles des Plasmabrenners 48 in den verschiedenen Positionen zu erzielen und die durch die Öffnung 47 im Haubenteil 45 entstehenden Wärmeverluste möglichst gering zu halten, ist im Bereich der Öffnung 47 am Außenmantel des Haubenteiles 45 ein Schiebefenster 56 mit einer Ausnehmung 57 verschiebbar angeordnet, wobei das Schiebefenster 56 beim Verschwenken des Plasmabrenners 48 automatisch mitbewegt wird und somit die für den Plasmabrenner notwendige lichte Weite der Ausnehmung 57 minimiert ist.

Am Außenmantel der Haube 12 ist eine sich vertikal nach oben erstreckende und über dem Brennraum 31 angeordnete Zuführleitung 58 mit einer Regel-bzw. Sperrklappe 59 für Feinmöller angeflanscht. Zwischen der Zuführleitung 58 und dem Schacht 1 ist ein parallel zu diesen gerichteter rohrförmiger Abzugskanal 60 am Außenmantel der Haube 12 angeflanscht. Der Abzugskanal 60 mündet über eine oder mehrere Zweigleitung(en) 61 in den Schachtraum 4, wobei in jeder Zweigleitung eine Regulierklappe 62 vorgesehen ist.

Bei der in den Fig. 3 und 4 gezeigten Ausführungsform ist im Übergangsbereich vom Schachtraum 4' in den Brennraum 31 des Schmelzofens 2' anstelle der gegen den Schacht 1' ansteigenden Rutschfläche 36 der Ausmauerung 14,24 ein sich waagrecht erstreckender Boden 32' vorgesehen, an den eine sich vertikal nach oben bis zum Flansch 9 am unteren Ende des Schachtes 1' erstreckende Vertikalwand 63 anschließt. Als Fördereinrichtung für den Möller 5 dient hierbei eine mittels eines Druckmittelzylinders 64 betätigbare Schubeinrichtung 65. Die Kolbenstange 66 des an einer am Ofenunterteil 11' starr befestigten Konsole 67 angelenkten Druckmittelzylinders 64 ist an einem Kolben 68 angelenkt, der eine am unteren Ende der Vertikalwand 63 des Ofenunterteiles 11' vorgesehene korrespondierende Öffnung 69 durchsetzt, wobei die Stirnfläche 70 des Kolbens 68 bei eingefahrener Kolbenstange die Innenfläche 71 der Vertikalwand 63 fortsetzt. Durch eine horizontale Schubbewegung des Kolbens 68 wird Möller 5 in den Brennraum 31 gefördert.

Gemäß der in den Fig. 5 und 6 gezeigten Ausführungsform ist der Brennraum 31 peripher von einem im Grundriß gesehen U-förmigen Schacht 1″ umgeben, wobei das offene Ende des U zum Schmelzensammelraum 26 hin gerichtet ist. Der Ofenunterteil 11″ des Schmelzofens 2″ weist eine gegen den Schacht 1″ ansteigende und den Brennraum 31 peripher umgebende kegelförmige Rutschfläche 72 auf, die in die äußere, U-förmige vertikale Begrenzungswand 73 des Schachtraumes 4″ übergeht. In den Schachtraum 4″ münden mehrere und im Winkel zueinander stehende Zweigleitungen 74,75,76 des Abzugskanales 60, so daß eine gleichmäßige Begasung des Möllers 5 möglich ist. Der den Brennraum 31 umgebende Schachtraum 4″ ermöglicht einen gleichmäßig um den Plasmabrenner 48 verteilten Möllerschüttkegel 38″, wodurch die seitliche Wärmestrahlung des Plasmabogens gegen den Möller 5 gerichtet ist und die Ausmauerung 14, 24 geschont wird.

Die Funktion der Anlage ist nachstehend anhand der in den Fig. 1 und 2 dargestellten Ausführungsform näher erläutert:

Nach Chargieren der Anlage wird der Plasmabrenner 48 aus der Ruheposition C in die Position B gebracht, in der er gegen das im Schmelzensammelraum 26 verbliebene leitfähige Material gezündet wird. Anschließend wird der Plasmabrenner 48 gegen den Fuß 37 des Möllerschüttkegels 38 gerichtet. Der Möller am Fuß 37 des Möllerschüttkegels 38 wird abgeschmolzen, und die entstehende Schmelze rinnt über die Überlaufkante 34 in den tieferliegenden Schmelzensammelraum 26. Über die gegen den Schacht 1 ansteigende Rutschfläche 36 rutscht der Möller 5 entsprechend der Abschmelzung nach.

Durch die räumliche Trennung des Möllerschüttkegels 38 vom Schmelzensammelraum 26 kann der noch stückige Möller des Möllerschüttkegels 38 nicht in das Schmelzbad 27 gelangen. Hierdurch ist eine exakte Prozeßführung möglich, weil die schmelzflüssige Phase vom stückigen Möller getrennt ist und eine beliebige Überhitzung des Bades im Schmelzensammelraum 26 erreicht wird, indem der Plasmabrenner 48 auch gegen den Schmelzensammelraum 26 gerichtet und das Schmelzbad 27 auf die gewünschte Temperatur erhitzt werden kann.

Die im Ofeninnenraum 6 entstehenden Gase durchströmen den Möller 5 im Schacht 1 von unten nach oben, wodurch dieser vorgewärmt wird und gewünschte Reaktionen erfolgen können, z.B. eine Vorreduktion.

Bei der erfindungsgemäßen Anlage wird die im Ofeninnenraum 6 entstehende Wärme der Prozeßgase, Stäube und Zwischenprodukte, wie Sublimate oder Kondensate, dem Möller 5 im Schachtraum 1 über den Mündungsbereich 10 zugeführt. Die Zuführung kann auch über die Zweigleitungen 60,61 erfolgen, die auch übereinander angeordnet werden können, wodurch die aus dem Ofeninnenraum 6 abgezogenen Gase dem Schachtraum 4 in unterschiedlichen Höhen zugeführt werden können und ein gewünschter Temperaturverlauf eingestellt sowie ein gleichmäßiger Ofengang erzielt werden kann.

Die Vorteile all dieser Zuführungsmöglichkeiten liegen in der optimalen Nutzung der Wärme der im Ofeninnenraum 6 entstehenden Gase, Stäube und Zwischenprodukte und dem dadurch niedrigeren spezifischen Energieverbrauch der Anlage. Weiters gewährleisten diese Zuführungsleitungen eine optimale Abscheidung der Stäube und Zwischenprodukte am Möller 5 und somit ein optimales Produktausbringen sowie eine Verringerung der möglichen Schadstoffemission der Anlage. Für die Steuerung der verschiedenen Prozeßparameter ist zweckmäßig eine elektronische Regelanlage vorgesehen (z.B. Ofendruck, Materialdosierung).

Die Erfindung beschränkt sich nicht auf die in den Zeichnungen dargestellten Ausführungsbeispiele, sondern kann in verschiedener Hinsicht modifiziert werden. Beispielsweise kann der Brennraumboden 32 auch waagrecht ausgebildet sein. Weiters können anstelle der Druckmittelzylinder 55,64 auch andere Stellmittel, wie beispielsweise Schraubspindeln, verwendet werden. Am oberen Ende des Schachtraumes 4, 4', 4", kann ein Saugzuggebläse mit vorzugsweise variabler Drehzahl vorgesehen sein, wodurch eine rasche und energiesparende Anpassung der Strömungsgeschwindigkeit der den Schacht durchströmenden Gase entsprechend den jeweiligen Prozeßerfordernissen erfolgen kann.

Nachfolgend ist ein Ausführungsbeispiel beschrieben:

Zur Herstellung von Ferromangan carburé werden südafrikanische Manganerze mit den in Tabelle 1 angegebenen Erzanalysen eingesetzt.

Tabelle 1

| Manganerz | CaO (%) | MgO (%) | $SiO_2$ (%) | Mn (%) | Fe (%) |
|---|---|---|---|---|---|
| Erz I (MAMATWAN) | 14,9 | 3,13 | 4,25 | 38,5 | 4,53 |
| Erz II (WESSELS WH) | 5,25 | 0,66 | 5,8 | 50,0 | 9,26 |
| Erz III (WESSELS WL) | 5,26 | 0,64 | 7,16 | 48,0 | 12 |

Als Reduzent wird verwendet:

-Koks: $C_{fix} = 90\%$

-Kohle: $C_{fix} = 54,2\%$

Das Mischungsverhältnis Kohle zu Koks beträgt 60 : 40.

Als Rohmaterialeinsatz wird eine Mischung gemäß Tabelle 2 verwendet.

Tabelle 2

|  | kg/t Erz |
|---|---|
| Erz I (MAMATWAN) | 600 |
| Erz II (WESSELS WH) | 170 |
| Erz III (WESSELS WL) | 230 |
| Schrott | 57 |
| Quarz | 25 |
| Kohle | 195 |
| Koks | 84 |

Es ergeben sich bei der Produktion des Ferromangan folgende Betriebswerte:

Tabelle 3

| Einsatz: | | |
|---|---|---|
| | Erz | 1585 kg/h |
| | Quarz | 40 kg/h |
| | Reduzenten | 442 kg/h |
| | Schrott | 10 kg/h |
| Produkt (FeMn) | | 757 kg/h |
| Schlacke | | 499 kg/h |
| Ofenwirkleistung | | 2,5 MW |
| Das Ofengas weist eine Analyse von 70 % CO, 15 % $CO_2$, 10 % $H_2$ und 5 % $N_2$ auf. Ferner fallen 22,5 $m^3_n$/h Argon an. Die Gasaustrittstemperatur am Schachte de liegt unter 500° C | | |

Die Analyse des hergestellten Metalles ist in nachstehender Tabelle 4 enthalten; die Analyse der anfallenden Schlacke ist in Tabelle 5 enthalten.

Tabelle 4

|  | (%) |
|---|---|
| Mn | 76,6 |
| Fe | 15,4 |
| Si | 0,20 |
| C | 7,00 |

7

Tabelle 5

|  | (%) |
|---|---|
| CaO | 38 |
| MgO | 7,5 |
| $SiO_2$ | 32,5 |
| FeO | 0,20 |
| MnO | 19,55 |
| Rest $Al_2O_3$, metallische Anteile etc. | |

Der erfindungsgemäße Ofen ermöglicht die Vermeidung von Manganverlusten infolge von Manganabdampfung, wie er bei Plasmaöfen ohne Schacht auftritt, d.h. bei Plasmaöfen mit einer nach der Abgasseite hin offenen Anordnung, bei der die Abgase direkt aus dem Plasmaofen in ein Abgassystem abgeführt werden. Bei solchen Öfen beträgt das Manganausbringen weniger als 60 % und der Mangangehalt im Metall liegt bei nur 72 bis 77 %. Die Manganverluste, die durch Abdampfung infolge der hohen Plasmatemperaturen verursacht werden, betragen mehr als 10 %. Daraus resultiert ein sehr hoher Energieaufwand von 3800 bis 4500 kWh/t Ferromangan.

Mit dem erfindungsgemäßen Ofen kann ein Manganausbringen in der Größenordnung bis 84 % erzielt werden, wobei der Mangangehalt im Ferromangan 76 bis 78 % beträgt. Manganstaub bzw. Manganverdampfungsverluste liegen etwa bei 3 %, und der Energieverbrauch liegt bei etwa 3300 kWh/t Ferromangan.

Der erfindungsgemäße Ofen bietet gegenüber bekannten Elektro-Niederschachtöfen den Vorteil, daß auch staubförmige Einsatzmaterialien einsetzbar sind. Gegenüber dem Elektro-Niederschachtofen läßt sich mit dem erfindungsgemäßen Ofen durch Erhöhung der Basizität der MnO-Gehalt der Schlacke niedriger halten und auch hierdurch das Manganausbringen steigern.

**Ansprüche**

1. Anlage zur metallurgischen Behandlung, insbesondere zum Schmelzen oder Schmelzreduzieren von Metallen, Metallverbindungen und/oder Metall-Legierungen oder zur Herstellung von Calciumcarbid, mit einem Möller (5) aufnehmenden Schacht (1,1', 1''), mit einem seitlich und unterhalb des Schachtes (1, 1', 1'') liegenden Schmelzensammelraum (26) sowie mindestens einem seitlich des Schachtes (1,1', 1'') angeordneten Brenner (48), dadurch gekennzeichnet, daß der Brenner (48) in einem das untere Schachtende mit dem Schmelzensammelraum (26) verbindenden Brennraum (31) angeordnet und als Plasmabrenner (48) ausgebildet ist, wobei der Brennraum (31) auf einem Niveau oberhalb des Schmelzensammelraumes (26) liegt und einen gegen den Schacht (1, 1', 1'') ebenen oder vorzugsweise ansteigenden Brennraumboden (32) aufweist, der in den Schmelzensammelraum (26) mit einer die Metallschmelze (27) vom Möller (5) trennenden Überlaufkante (34) übergeht.

2. Anlage nach Anspruch 1, dadurch gekennzeichnet, daß der Brennraum (31) im Grundriß gesehen sich ausgehend vom Schachtraum (4,4', 4'') zum Schmelzensammelraum (26) hin erweitert.

3. Anlage nach Anspruch 1 oder 2, dadurch gekennzeichnet, daß der Schachtraum (4'') den Brennraum (31) teilweise peripher umgibt und der Schmelzensammelraum (26) an der vom Schachtraum (4'') freigelassenen Seite des Brennraumes (31) anschließt.

4. Anlage nach einem oder mehreren der Ansprüche 1 bis 3, dadurch gekennzeichnet, daß im Übergangsraum vom Schachtraum (4,4', 4'') zum Brennraum (31) eine Möllerfördereinrichtung (36,65,72) vorgesehen ist.

5. Anlage nach Anspruch 4, dadurch gekennzeichnet, daß die Möllerfördereinrichtung als schräge Rutschfläche (36,72) ausgebildet ist.

6. Anlage nach Anspruch 4, dadurch gekennzeichnet, daß die Möllerfördereinrichtung als Schubeinrichtung (65) ausgebildet ist.

7. Anlage nach einem oder mehreren der Ansprüche 1 bis 6, dadurch gekennzeichnet, daß der Brennraum (31) einen Abzugskanal (60) aufweist, der über mindestens eine Zweigleitung (61,74,75,76) mit dem Schachtraum (4,4', 4'') verbindbar ist.

8. Anlage nach einem oder mehreren der Ansprüche 1 bis 7, dadurch gekennzeichnet, daß in den Brennraum (31) eine Zuführleitung (58) für Feinmöller, Legierungs- und Zuschlagstoffe mündet.

9. Anlage nach einem oder mehreren der Ansprüche 1 bis 8, dadurch gekennzeichnet, daß der Plasmabrenner (48) wahlweise von einer in den Brennraum (31) ragenden Normalbetriebsposition (A) in eine gegen den Schmelzensammelraum (26) ragende Position (B) bzw. umgekehrt bringbar ist.

FIG.1

FIG. 2

EP 0 394 214 A1

FIG. 3

FIG. 4

# FIG. 6

# FIG. 5

Europäisches Patentamt

**EUROPÄISCHER RECHERCHENBERICHT**

Nummer der Anmeldung

EP 90 89 0102

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 507 141 (SKF) <br> * Figur 1 * <br> --- | 1 | C 22 B 4/00 <br> F 27 B 3/18 |
| A | EP-A-0 056 773 (CLESID) <br> * Figur 1 * <br> --- | 1 | |
| A | AT-B- 323 778 (MAERZ OFENBAU) <br> * Figur 1 * <br> --- | 1 | |
| A | US-A-3 539 169 (HIGGS et al.) <br> * Figur 1 * <br> --- | 4,5 | |
| A | EP-A-0 170 809 (FUCHS SYSTEMTECHNIK) <br> * Figur 1 * <br> --- | 1 | |
| A | EP-A-0 207 929 (VOEST-ALPINE) <br> --- | | |
| A | EP-A-0 240 485 (VOEST-ALPINE) <br> * Figur 2 * <br> --- | 1 | |
| A,D | AT-B- 363 503 (VOEST-ALPINE) <br> & EP-A-43373 <br> ------ | | |

**RECHERCHIERTE SACHGEBIETE (Int. Cl.5)**

C 21 B
C 21 C
C 22 B
F 27 B

Der vorliegende Recherchenbericht wurde für alle Patentansprüche erstellt

| Recherchenort | Abschlußdatum der Recherche | Prüfer |
|---|---|---|
| BERLIN | 20-07-1990 | SUTOR W |